# EUROPEAN PATENT APPLICATION

(11) **EP 4 431 452 A1**
(43) Date of publication of application: **18.09.2024**
(21) Application number: 23161461.1
(22) Date of filing: 13.03.2023
(51) Int. Cl.: C01B 3/38, F23J 15/06

(54) **PROCESS AND APPARATUS FOR COOLING A FLUE GAS STREAM FROM A REFORMER FURNACE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Kaiser, Tobias, 60439 Frankfurt am Main (DE); Roesch, Alexander, 60439 Frankfurt am Main (DE); Ulber, Dieter, 60439 Frankfurt am Main (DE)
(74) Representative: Air Liquide

(57) **Abstract**

The invention relates to a process and an apparatus for cooling a flue gas stream from a reformer furnace of a steam reformer for steam reforming a hydrocarbon containing feed stream with a reforming steam stream to produce a crude synthesis gas stream. According to the invention, the flue gases are cooled by heat exchange with air in a combustion air preheater which comprises at least two separate heat exchange zones, and the temperature of the flue gas stream passing the separate heat exchange zones decreases stepwise in flow direction of the flue gas stream.

## Description

### Field of the invention

The invention relates to a process for cooling a flue gas stream from a reformer furnace of a steam reformer for steam reforming a hydrocarbon containing feed stream with a reforming steam stream to produce a crude synthesis gas stream. The invention also relates to a steam reformer for steam reforming a hydrocarbon containing feed stream with a reforming steam stream to produce a crude synthesis gas stream, comprising a reformer furnace and an apparatus for cooling a flue gas stream from the reformer furnace, and being arranged so as to perform the process of the invention.

### Prior art

Hydrocarbons may be catalytically reacted with steam to afford synthesis gas, i.e. mixtures of hydrogen (H₂) and carbon monoxide (CO). As is explained in Ullmann's Encyclopedia of Industrial Chemistry, Sixth Edition, 1998 Electronic Release and 6th edition 2003, keyword "Gas Production", so-called steam reforming is the most commonly employed method of producing synthesis gas which may then be converted into further important commodity chemicals such as methanol or ammonia. While different hydrocarbons, such as for example naphtha, liquid gas or refinery gases may be converted, it is steam reforming of methane-containing natural gas (steam methane reforming, SMR) that dominates. This is highly endothermic. It is therefore performed in a reformer furnace in which numerous catalyst-containing reformer tubes in which the steam reforming reaction takes place are arranged in parallel. The outer walls of the reformer furnace and its ceiling and floor are faced or lined with a plurality of layers of refractory material which withstands temperatures of up to 1200°C. The reformer tubes are usually fired with burners which are mounted on the top or bottom or on the side walls of the reformer furnace and directly fire the interspace between the reformer tubes. The fuel employed is a portion of the input gas and/or byproduct streams containing flammable components obtained during product workup. Heat transfer to the reformer tubes is effected by heat radiation and convective heat transfer from the hot flue gases obtained during combustion in the burners.

After pre-heating by heat exchangers or fired heaters to about 500°C the hydrocarbon-steam mixture enters the reformer tubes after end-heating to about 500°C to 800 °C and is therein converted into carbon monoxide and hydrogen over the reforming catalyst. Common catalysts are nickel-based reformer catalysts which are introduced into the reformer tubes as a dumped bed of shaped bodies for example. While higher hydrocarbons are fully converted into carbon monoxide and hydrogen, in the case of methane partial conversion is typical. The composition of the product gas is determined by the reaction equilibrium; the product gas thus comprises not only carbon monoxide and hydrogen but also carbon dioxide, unconverted methane and water vapour.

The waste heat recovery systems (WHRS) of steam methane reformers (SMR) typically comprise combustion air preheaters in order to heat the cold combustion air with the residual heat of the flue gas in a crossflow heat exchange step by means of one or more heat exchangers to increase the energetic efficiency of the steam reforming plant.

When the flue gas is cooled down below the dew point temperature, condensate may occur in the flue gas discharge system and the condensate may comprise acidic, for example sulfurous components. This may be problematic since the condensing acids are chemically aggressive and attack the mostly metallic materials of the flue gas discharge system and/or of the one or more heat exchangers of the air preheater.

Since the heat exchangers of the air preheater can extend over several meters in length, typically a temperature curve over this length is observed. Thus, the temperature may fall lower than that of the acid dew point at the coldest point, which is typically at the end of the air preheater. Depending on the operating time, corrosion can then be expected at this point, which can lead to damage and possibly to equipment failure.

One often applied industrial method to avoid this damage is to adapt the material selection so that the air preheaters are made of a more corrosion resistant material, like using high quality austenitic steel or covering the affected parts with glass coatings. However, the higher equipment costs related to using more corrosion resistant materials, and, in the case of glass coating, an increased space requirement in order to achieve the necessary heat exchange surface are disadvantageous.

There is therefore a need for processes and apparatuses for steam reforming which specifically seek to avoid or reduce this disadvantages.

### Description of the invention

The present invention thus has for its object to specify such a process and a corresponding plant which do not exhibit the recited disadvantages of the prior art.

This object is achieved in a first aspect by a process having the features of Claim 1 and in a further aspect with a plant having the features of Claim 12. Further embodiments of the invention are apparent from the dependent claims of the respective category.

Steam reforming conditions are known to those skilled in the art from the prior art, for example the documents discussed at the outset. These are the physicochemical conditions under which a measurable, preferably industrially relevant, conversion of hydrocarbons to synthesis gas products is achieved. Important parameters include adjustment of a suitable steam reforming entry temperature of typically about 1000 °C and addition of steam to the input gas containing hydrocarbons and thus adjustment of a steam/carbon ratio (S/C ratio). Typical values for the S/C ratio are between 1.5 and 3.5 mol/mol. Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention.

All pressures are reported in absolute pressure units, bara or bar(a) for short, or in gauge pressure units, barg or bar(g) for short, unless otherwise stated in the particular individual context.

A fluid connection between two regions of the apparatus according to the invention is to be understood as meaning any type of connection whatsoever which makes it possible for a fluid, for example a gas stream, to flow from one to the other of the two regions, neglecting any interposed regions or components. In particular a direct fluid connection is to be understood as meaning any type of connection whatsoever which makes it possible for a fluid, for example a gas stream, to flow directly from one to the other of the two regions, wherein no further regions or components are interposed with the exception of purely transportational operations and the means required therefor, for example pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e. for example pipelines, pumps, compressors, valves, which seem necessary or sensible to said skilled person for performance of this process step on the basis of his knowledge of the art.

For the purposes of this description steam is to be understood as being synonymous with water vapour unless the opposite is indicated in an individual case. By contrast, the term "water" refers to water in the liquid state of matter unless otherwise stated in an individual case.

A heat exchange relationship is to be understood as meaning the possibility of heat exchange or heat transfer between two regions of the apparatus according to the invention for example, wherein any mechanisms of heat exchange or heat transfer such as heat conduction, heat radiation or convective heat transport may come into effect. An indirect heat exchange relationship is especially to be understood as meaning the type of heat exchange or heat transfer which is carried out through a wall (so-called heat transit) which comprises the stages of heat transfer from fluid 1 to the surface of the wall, heat conduction through the wall and heat transfer from the surface of the wall to fluid 2.

In order to reduce the equipment costs and to keep the space requirement within limits, the present invention is based on the finding that it is only required to use corrosion resistant or corrosion protected construction materials at those points along the flue gas discharge system, and the apparatuses, especially the heat exchangers present therein, where the flue gas temperature falls below the dew point and acidic condensates may form, rather than fabricating the entire components and apparatuses, for example the entire air preheaters, from these costly materials.

Air preheaters are typically composed of prefabricated blocks, which, according to the invention, may be partly or completely made of less expensive materials, for example carbon steel, with regard to surfaces where it is not expected that the flue gas temperature falls below the dew point. For other surfaces which might be exposed to temperatures below the dew point, higher-grade materials are used which are more corrosion-resistant and more expensive. Such corrosion resistant or corrosion protected materials may comprise corrosion resistant steels, for example austenitic steels, glass coatings or even other non-metallic composites.

In the case where the flue gas temperature is to be very much reduced and the flue gas blower fan is to be protected from condensate droplets that may mechanically damage the fan blades of the blower, the air preheater may be split and another, possibly smaller, air preheater may be downstream of the fan.

### Preferred embodiments of the invention

A second aspect of the process according to the invention is characterized in that by passing the first heat exchanger, the temperature of the flue gas stream is reduced in such a manner that the temperature of the flue gas stream falls below its dew point only in the last heat exchange zone. In this manner, the possible problem of condensation of acidic components is located to only parts of the flue gas discharge system, and only these parts may be constructed from corrosion resistant or corrosion protected materials.

A third aspect of the process according to the invention is characterized in that the last heat exchange zone is arranged in fluid connection to a liquid condensate separation device configured to discharge a liquid condensate stream.

A fourth aspect of the process according to the invention is characterized in that only in the last heat exchange zone, the flue gas contacted surfaces are produced of a corrosion resistant material, preferably produced of stainless steel, most preferably produced of austenitic steel. In this manner, the possible problem of condensation of acidic components is located to only the last heat exchange zone of the air preheater in the flue gas discharge system, and only the last heat exchange zone of the air preheater may be constructed from corrosion resistant materials.

A fifth aspect of the process according to the invention is characterized in that only in the last heat exchange zone, the flue gas contacted surfaces are coated with a corrosion resistant material layer, preferably coated with a stainless steel layer or a glass layer. In this manner, the possible problem of condensation of acidic components is located to only the last heat exchange zone of the air preheater in the flue gas discharge system, and only the last heat exchange zone of the air preheater may be coated with a corrosion resistant material layer.

A sixth aspect of the process according to the invention is characterized in that the first heat exchange zone and the last heat exchange zone are constructed as modules or apparatuses being contained in a common shell. In this manner, construction materials are saved and the floor space requirements of the apparatus is reduced.

A seventh aspect of the process according to the invention is characterized in that the first heat exchange zone and the last heat exchange zone are constructed as modules or apparatuses being contained in individual shells. This allows a more flexible positioning and setup of the first heat exchange zone and the last heat exchange zone.

A eighth aspect of the process according to the invention is characterized in that the first heat exchange zone is arranged upstream of the flue gas blower, and in that the last heat exchange zone is arranged downstream of the flue gas blower. In the case where the flue gas temperature is to be very much reduced and the flue gas blower fan is to be protected from condensate droplets that may mechanically damage the fan blades of the blower, the air preheater may be split and another, possibly smaller, air preheater may be downstream of the fan.

A ninth aspect of the process according to the invention is characterized in that the last heat exchange zone is arranged inside the flue gas stack. This reduces the floor space requirements of the apparatus even further.

A tenth aspect of the process according to the invention is characterized in that the last heat exchange zone is arranged inside the flue gas stack, and in that the liquid condensate stream is discharged from the bottom of the flue gas stack. This reduces the floor space requirements of the apparatus even further, and the liquid condensate stream may easily be discharged to a safe location outside the steam reformer.

A eleventh aspect of the process according to the invention is characterized in that the cool oxygen containing oxidant stream is routed through the last heat exchange zone and the first heat exchange zone in counter-current flow relative to the flue gas stream flowing through the flue gas duct. In this manner, the heat exchange between the cool oxygen containing oxidant stream and the flue gas stream is optimized from an energetic point of view.

A thirteenth aspect of the steam reformer according to the invention is characterized in that the last heat exchange zone is arranged in fluid connection to a liquid condensate separation device configured to discharge a liquid condensate stream. In this manner, the liquid condensate stream may easily be discharged to a safe location outside the steam reformer.

A fourteenth aspect of the steam reformer according to the invention is characterized in that the first heat exchange zone and the last heat exchange zone are constructed as modules or apparatuses being contained in a common shell. In this manner, construction materials are saved and the floor space requirements of the apparatus is reduced.

A fifteenth aspect of the steam reformer according to the invention is characterized in that the first heat exchange zone and the last heat exchange zone are constructed as modules or apparatuses being contained in individual shells. This allows a more flexible positioning and setup of the first heat exchange zone and the last heat exchange zone.

A sixteenth aspect of the steam reformer according to the invention is characterized in that the first heat exchange zone is arranged upstream of the flue gas blower, and in that the last heat exchange zone is arranged downstream of the flue gas blower. In the case where the flue gas temperature is to be very much reduced and the flue gas blower fan is to be protected from condensate droplets that may mechanically damage the fan blades of the blower, the air preheater may be split and another, possibly smaller, air preheater may be downstream of the fan.

A seventeenth aspect of the steam reformer according to the invention is characterized in that the last heat exchange zone is arranged inside the flue gas stack. This reduces the floor space requirements of the apparatus even further.

A eighteenth aspect of the steam reformer according to the invention is characterized in that the last heat exchange zone is arranged inside the flue gas stack, and in that the liquid condensate stream is discharged from the bottom of the flue gas stack. This reduces the floor space requirements of the apparatus even further, and the liquid condensate stream may easily be discharged to a safe location outside the steam reformer.

### Exemplary embodiment and working example

Developments, advantages and possible applications of the invention are also apparent from the following description of working and numerical examples and the drawings. All features described and/or depicted form, either in themselves or in any combination, the invention, regardless of the way they are combined in the claims or the back-references therein.

In the figures:
- Fig. 1: shows an example of a process or apparatus for producing synthesis gas by steam reforming, and cooling a flue gas stream from a reformer furnace according to the prior art,
- Fig. 2: shows a first example of a process or apparatus for producing synthesis gas by steam reforming and cooling a flue gas stream from a reformer furnace according to the invention,
- Fig. 3: shows a second example of a process or apparatus for producing synthesis gas by steam reforming and cooling a flue gas stream from a reformer furnace according to the invention.

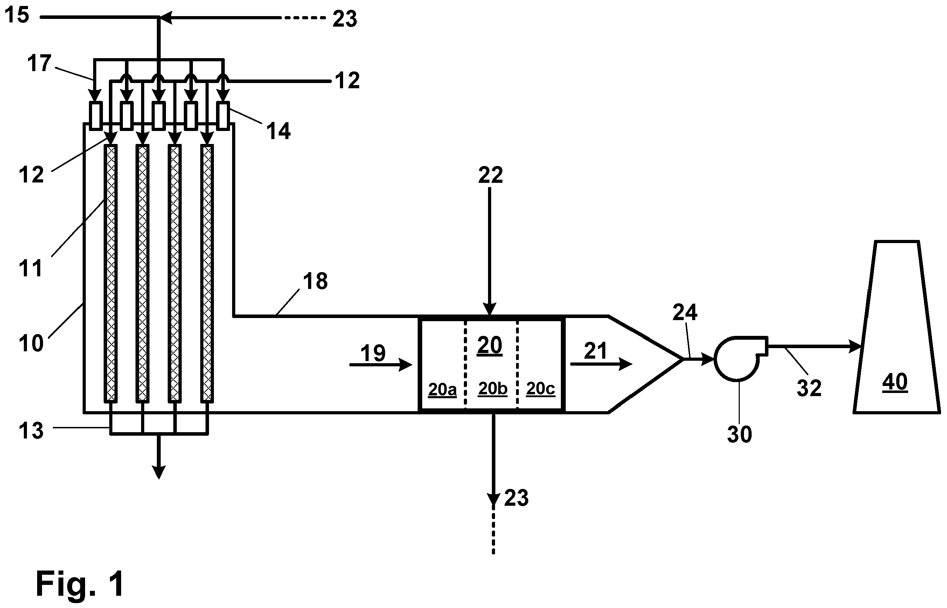

Fig. 1 schematically shows an example of a process or apparatus for producing synthesis gas by steam reforming according to the prior art. A reformer furnace 10 contains a multitude of reformer tubes 11 filled with catalyst active for steam reforming. Usually, the number of reformer tubes is several hundred; in the Figure, only four reformer tubes are shown for reasons of clarity. The catalyst used may be a commercially available nickel-based reforming catalyst. Via conduit 12, comprising the main conduit and distribution conduits, the reformer tubes are charged with a preheated, hydrocarbonaceous natural gas feed as reformer feedstock. The inlet temperature of the reformer feedstock is 500 °C. Prior to entry of the reformer feedstock into the reformer, steam is admixed to the same (not shown in the Figure), so that there is a defined steam/carbon ratio, in an example of 3 mol/mol. After conversion of the feedstock in the reformer tubes under steam reforming conditions, a crude synthesis gas comprising hydrogen, CO and non-converted natural gas constituents is withdrawn via conduit 13, comprising the main conduit and collection conduits from the single reformer tubes.

The reformer tubes 11 are fired by means of a multitude of burners 14 which are mounted on the upper surface of the reformer furnace and directly fire the space between the reformer tubes. For reasons of clarity, only five burners are shown in the Figure. In the present example, the burners 14 are operated with natural gas as fuel, which is supplied to the burners via main conduit 15 an fed to the single burners via distribution conduits 17. Preheated combustion air is supplied via conduit 23 and admixed to the burner fuel in conduit 15.

In the reformer furnace 10, the heat transfer to the reformer tubes is effected by thermal radiation and convective heat transmission of the hot flue gases. After completed heat exchange to the reformer tubes, the flue gases enter into the waste heat part 18 of the reformer furnace 10. The conveyance of the flue gases through the waste heat part of the reformer furnace is effected in the suction draft of a flue gas blower 30. In the waste heat part of the reformer furnace, the further cooling of the flue gases is effected by a plurality of heat exchangers in the flue gas path, wherein the enthalpy of the flue gases is utilized for generating preheated media streams, for example for preparing the preheated, hydrocarbonaceous natural gas feed as the reformer feedstock, of for steam generation (both not shown).

In the waste heat part 18 of the reformer furnace 10, a combustion air preheater 20 is arranged which is designed as a cross flow heat exchanger and which comprises three heat exchange zones 20a, 20b, 20c, A hot flue gas stream 19 enters the combustion air preheater 20 at heat exchange zone 20a, passes through heat exchange zone 20b, and leaves the combustion air preheater 20 at heat exchange zone 20c as a cooled flue gas stream 21. On its passage through the combustion air preheater 20, the hot flue gas stream is cooled in indirect heat exchange against a cold air stream which is introduced into the combustion air preheater 20 via conduit 22. A preheated combustion air stream is discharged from the combustion air preheater 20 via conduit 23 and admixed to the burner fuel in conduit 15.

In a preferred embodiment, not shown in detail in Fig. 1, the cold air stream first enters the combustion air preheater 20 at heat exchange zone 20c, passes though heat exchange zone 20b, and leaves the combustion air preheater 20 at heat exchange zone 20a. In other words, while the heat exchange in each heat exchange zone 20a, 20b, 20c is of the cross flow type, the passage of the air stream through all of the heat exchange zone 20a, 20b, 20c is in counter-current relative to the flue gas stream.

After passing the combustion air preheater 20, the cooled flue gases 21 leave the waste heat part of the reformer furnace via conduit 24 and are supplied to the flue gas disposal 40, for example a flue gas stack 40, via conduit 32 by means of the blower 30.

According to the prior art, the combustion air preheater 20, and the heat exchange zones 20a, 20b, 20c comprised therein, are constructed from corrosion resistant materials or coated with a corrosion resistant material layer, in order to avoid or reduce corrosion due to condensation of acidic condensates on the components of the combustion air preheater and the heat exchange zones 20a, 20b, 20c, for example the heat exchange surfaces. As an example, the combustion air preheater 20 and the heat exchange zones 20a, 20b, 20c may be constructed from high-alloyed steels, for example austenitic stainless steels, and/or coated with a corrosion protection glass layer.

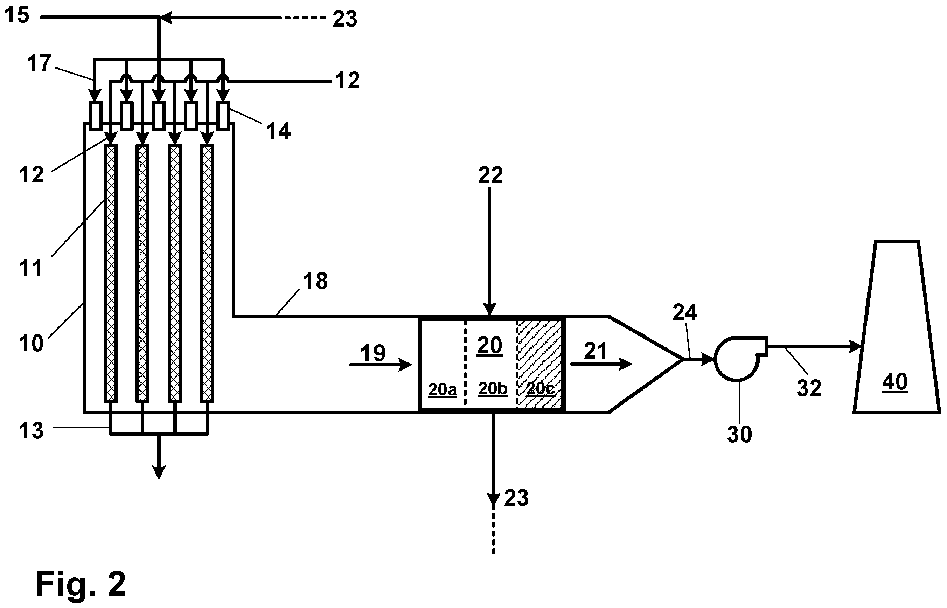

Fig. 2 shows a first example of a process or apparatus for producing synthesis gas by steam reforming and cooling a flue gas stream from a reformer furnace according to the invention. All components and devices correspond to those shown in Fig. 1, having the same reference numeral.

In contrast to Fig. 1, the combustion air preheater 20 is designed and operated in a manner that the temperature of the flue gas stream subsequently passing through heat exchange zones 20a, 20b, 20c falls below the dew point temperature only in heat exchange zone 20c. Consequently, according to the invention, only heat exchange zone 20c is constructed from a corrosion resistant material and/or coated with a corrosion resistant material layer, for example a glass layer. This is indicated in Fig. 2 by a hatching pattern.

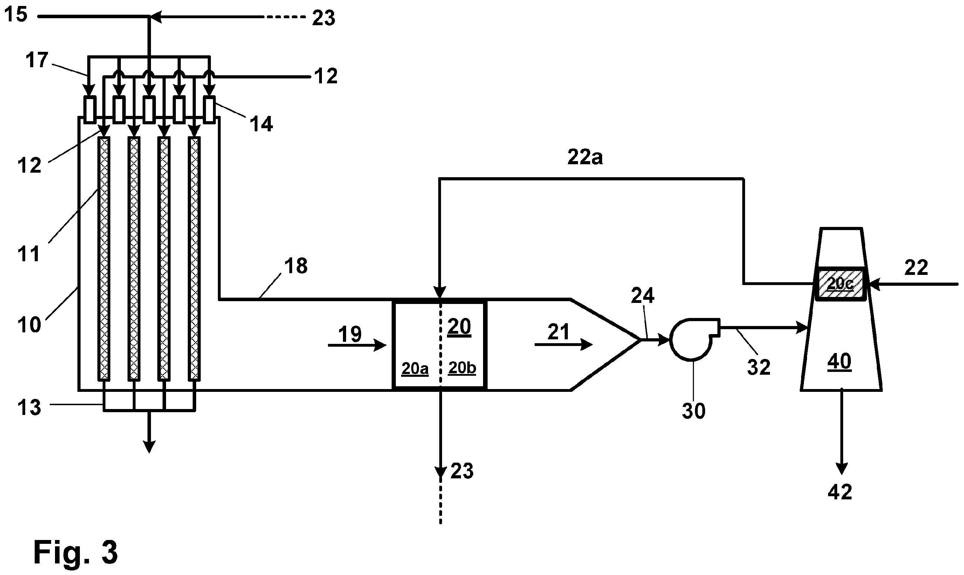

Fig. 3 shows a first example of a process or apparatus for producing synthesis gas by steam reforming and cooling a flue gas stream from a reformer furnace according to the invention. Again, all components and devices correspond to those shown in Fig. 1, having the same reference numeral.

In contrast to Fig. 1, the combustion air preheater 20 still consists of three heat exchange zones 20a, 20b, 20c, but only heat exchange zones 20a and 20b are arranged inside the waste heat part 18 of the reformer furnace, upstream of the flue gas blower 30, while heat exchange zone 20c is arranged inside of the flue gas stack 40, downstream of the flue gas blower 30. A cold air stream is introduced into heat exchange zone 20c via conduit 22 and, while passing through it, exchanges heat by indirect heat exchange with the flue gas stream flowing up the flue gas stack. Since heat is withdrawn from the flue gas stream in this way, condensation may occur, and condensates are withdrawn via conduit 42 from the bottom of the flue gas stack 40.

A partially preheated combustion air stream is discharged from heat exchange zone 20c, and introduced into the combustion air preheater 20 comprising two heat exchange zones 20a and 20b, via conduit 22a.

Again, according to the invention, the combustion air preheater 20 is designed and operated in a manner that the temperature of the flue gas stream subsequently passing through heat exchange zones 20a, 20b, 20c falls below the dew point temperature only in heat exchange zone 20c, located in the flue gas stack. Consequently, according to the invention, only heat exchange zone 20c is constructed from a corrosion resistant material and/or coated with a corrosion resistant material layer, for example a glass layer. Again, this is indicated in Fig. 3 by a hatching pattern.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### List of reference numerals

- [10]: Reformer furnace
- [11]: Reformer tube
- [12]: Conduit
- [13]: Conduit
- [14]: Burner
- [15]: Conduit
- [17]: Conduit
- [18]: Waste heat part of the reformer furnace
- [19]: Hot flue gas stream
- [20]: Combustion air preheater
- [20a,b,c]: First, second, third heat exchange zone
- [21]: Cooled flue gas stream
- [22, 22a]: Conduit
- [23]: Conduit
- [24]: Conduit
- [30]: Flue gas blower
- [32]: Conduit
- [40]: Flue gas stack
- [42]: Conduit

## Claims

1. Process for cooling a flue gas stream from a reformer furnace of a steam reformer for steam reforming a hydrocarbon containing feed stream with a reforming steam stream to produce a crude synthesis gas stream, wherein the process comprises the following steps:
(a) Providing the steam reformer, comprising:
(a1) a plurality of catalyst filled reformer tubes with means for introducing the hydrocarbon containing feed stream and the reforming steam stream into the reformer tubes, and means for discharging the crude synthesis gas stream from the reformer tubes;
(a2) a reformer furnace with a floor, a ceiling and side walls which form a furnace interior, with the reformer tubes being arranged inside of the furnace interior and being heated by a plurality of burners arranged inside the reformer furnace;
(a3) a flue gas duct being arranged in fluid connection to the furnace interior through one of the side walls, and being arranged in fluid connection to a flue gas stack;
(b) providing the hydrocarbon containing feed stream and the reforming steam stream and introducing the hydrocarbon containing feed stream and the reforming steam stream into the reformer tubes, converting the hydrocarbon containing feed stream with the reforming steam stream under steam reforming conditions in the reformer tubes, discharging a crude synthesis gas stream comprising hydrogen, carbon oxides, and unconverted steam from the reformer tubes;
(c) providing a fuel gas stream and a preheated oxygen containing oxidant stream and introducing the fuel gas stream and the preheated oxygen containing oxidant stream into the burners, combusting the fuel gas stream with the preheated oxygen containing oxidant stream in the burners and thereby heating the reformer tubes and generating a hot flue gas stream;
(d) discharging the hot flue gas stream from the reformer furnace using the flue gas duct and a flue gas blower,
(e) cooling the hot flue gas stream by indirect heat exchange against a cool oxygen containing oxidant stream using a first heat exchanger, discharging a cooled flue gas stream and the preheated oxygen containing oxidant stream from the first heat exchanger;
(f) routing the cooled flue gas stream to the flue gas stack, wherein
(g) the first heat exchanger comprises at least two separate heat exchange zones, with a first heat exchange zone and a last heat exchange zone in flow direction of the flue gas stream, wherein the temperature of the flue gas stream passing the separate heat exchange zones decreases stepwise in flow direction of the flue gas stream.

2. Process according to claim 1, **characterized in that** by passing the first heat exchanger, the temperature of the flue gas stream is reduced in such a manner that the temperature of the flue gas stream falls below its dew point only in the last heat exchange zone.

3. Process according to claim 2, **characterized in that** the last heat exchange zone is arranged in fluid connection to a liquid condensate separation device configured to discharge a liquid condensate stream.

4. Process according to claim 2 or 3, **characterized in that** only in the last heat exchange zone, the flue gas contacted surfaces are produced of a corrosion resistant material, preferably produced of stainless steel, most preferably produced of austenitic steel.

5. Process according to any one of claims 2 to 4, **characterized in that** only in the last heat exchange zone, the flue gas contacted surfaces are coated with a corrosion resistant material layer, preferably coated with a stainless steel layer or a glass layer.

6. Process according to any one claims 1 to 5, **characterized in that** the first heat exchange zone and the last heat exchange zone are constructed as modules or apparatuses being contained in a common shell.

7. Process according to any one claims 1 to 5, **characterized in that** the first heat exchange zone and the last heat exchange zone are constructed as modules or apparatuses being contained in individual shells.

8. Process according to claim 7, **characterized in that** the first heat exchange zone is arranged upstream of the flue gas blower, and **in that** the last heat exchange zone is arranged downstream of the flue gas blower.

9. Process according to claim 8, **characterized in that** the last heat exchange zone is arranged inside the flue gas stack.

10. Process according to claim 9, **characterized in that** the last heat exchange zone is arranged inside the flue gas stack, and **in that** the liquid condensate stream is discharged from the bottom of the flue gas stack.

11. Process according to any one of the preceding claims, **characterized in that** the cool oxygen containing oxidant stream is routed through the last heat exchange zone and the first heat exchange zone in counter-current flow relative to the flue gas stream flowing through the flue gas duct.

12. Steam reformer for steam reforming a hydrocarbon containing feed stream with a reforming steam stream to produce a crude synthesis gas stream, comprising a reformer furnace and an apparatus for cooling a flue gas stream from the reformer furnace, wherein:
(a) the steam reformer comprises the following components or building groups, being arranged in fluid connection to one another:
(a1) a plurality of catalyst filled reformer tubes with means for introducing the hydrocarbon containing feed stream and the reforming steam stream into the reformer tubes, and means for discharging the crude synthesis gas stream from the reformer tubes;
(a2) a reformer furnace with a floor, a ceiling and side walls which form a furnace interior, with the reformer tubes being arranged inside of the furnace interior and being heated by a plurality of burners arranged inside the reformer furnace;
(a3) a flue gas duct being arranged in fluid connection to the furnace interior through one of the side walls, and being arranged in fluid connection to a flue gas stack;
(b) means for providing the hydrocarbon containing feed stream and the reforming steam stream and means for introducing the hydrocarbon containing feed stream and the reforming steam stream into the reformer tubes, means for discharging a crude synthesis gas stream comprising hydrogen, carbon oxides, and unconverted steam from the reformer tubes;
(c) means for providing a fuel gas stream and a preheated oxygen containing oxidant stream and means for introducing the fuel gas stream and the preheated oxygen containing oxidant stream into the burners;
(d) a flue gas blower, means for discharging the hot flue gas stream from the reformer furnace using the flue gas duct and the flue gas blower;
(e) a first heat exchanger for cooling the hot flue gas stream in indirect heat exchange against a cool oxygen containing oxidant stream, means for discharging a cooled flue gas stream and the preheated oxygen containing oxidant stream from the first heat exchanger;
(f) means for routing the cooled flue gas stream to the flue gas stack, wherein
(g) the first heat exchanger comprises at least two separate heat exchange zones, with a first heat exchange zone and a last heat exchange zone in flow direction of the flue gas stream, wherein means are comprised to allow that the temperature of the flue gas stream passing the separate heat exchange zones decreases stepwise in flow direction of the flue gas stream, and wherein
(h) only in the last heat exchange zone,
the flue gas contacted surfaces are produced of a corrosion resistant material, preferably produced of stainless steel, most preferably produced of austenitic steel, or
the flue gas contacted surfaces are coated with a corrosion resistant material layer, preferably coated with a stainless steel layer or a glass layer.

13. Steam reformer according to claim 12, **characterized in that** the last heat exchange zone is arranged in fluid connection to a liquid condensate separation device configured to discharge a liquid condensate stream.

14. Steam reformer according to any one of claim 12 to 13, **characterized in that** the first heat exchange zone and the last heat exchange zone are constructed as modules or apparatuses being contained in a common shell.

15. Steam reformer according to any one of claim 12 to 13, **characterized in that** the first heat exchange zone and the last heat exchange zone are constructed as modules or apparatuses being contained in individual shells.

16. Steam reformer according to any one of claim 12 to 15, **characterized in that** the first heat exchange zone is arranged upstream of the flue gas blower, and **in that** the last heat exchange zone is arranged downstream of the flue gas blower.

17. Steam reformer according to any one of claim 12 to 16, **characterized in that** the last heat exchange zone is arranged inside the flue gas stack.

18. Steam reformer according to claim 17, **characterized in that** the last heat exchange zone is arranged inside the flue gas stack, and **in that** the liquid condensate stream is discharged from the bottom of the flue gas stack.
